# EUROPÄISCHE PATENTSCHRIFT

(11) **EP 0 819 573 B1**
(45) Veröffentlichungstag und Bekanntmachung des Hinweises auf die Patenterteilung: **08.08.2001**
(21) Anmeldenummer: 97107853.0
(22) Anmeldetag: 14.05.1997
(51) Int. Cl.: B60N 2/48

(54) **Kopfstützen-Arretiereinrichtung**
Locking device for headrests
Dispositif de blocage pour appuis-tête

(30) Priorität: 25.05.1996 DE 19621270
(43) Veröffentlichungstag der Anmeldung: 21.01.1998
(73) Patentinhaber: GRAMMER AG, 92224 Amberg (DE)
(72) Erfinder: Delling, Gerhard, 92546 Schmidgaden (DE)
(74) Vertreter: LOUIS, PÖHLAU, LOHRENTZ & SEGETH

(56) Entgegenhaltungen:
- EP-A- 0 165 593
- DE-A- 3 437 803
- DE-U- 29 605 983
- FR-A- 2 671 587
- US-A- 3 544 162

## Beschreibung

Die Erfindung betrifft eine Kopfstützen-Arretiereinrichtung, die mit einem Verbindungselement zusammenwirkt, das eine höhenverstellbare Kopfstütze mit einer Rückenlehne eines Fahrzeugsitzes verbindet, wobei das Verbindungselement voneinander beabstandete Aussparungen aufweist und die Arretiereinrichtung ein in einem Gehäuse federnd vorgesehenes Rastorgan aufweist, das zwischen einer in eine Aussparung einrastenden Raststellung und einer Freigabestellung verstellbar ist, wobei das Rastorgan eine Rastkante und mindestens eine Gleitkante aufweist, die in Bezug zueinander derartig vorgesehen sind, daß in der Arretierstellung die Rastkante in die entsprechende Aussparung eingerastet ist, und wobei die mindestens eine Gleitkante in der Freigabestellung an der Außenkontur des zugehörigen Verbindungselementes gleitbeweglich anliegt und die Rastkante vom Verbindungselement beabstandet ist.

Üblicherweise ist die Kopfstütze mit der Rückenlehne eines Fahrzeugsitzes mittels zweier nebeneinander angeordneter Verbindungselemente höhenverstellbar verbunden. Bei einer solchen Ausbildung können dann auch zwei Kopfstützen-Arretiereinrichtungen der oben genannten Art vorgesehen sein.

Die in den Verbindungselementen ausgebildeten Aussparungen können als V-förmige Ausfräsungen gestaltet sein. Derartige Ausfräsungen bedingen einen nicht zu vernachlässigenden Herstellungsaufwand. Desweiteren sind Verbindungselemente mit Aussparungen bekannt, die als um das entsprechende Verbindungselement umlaufende Rillen gestaltet sind. Diese Rillen sind mit Hilfe eines geeigneten Werkzeuges im Vergleich zu den oben erwähnten Ausfräsungen preisgünstig herstellbar.

Bei Kopfstützen-Arretiereinrichtungen der eingangs genannten Art, wie sie z.B. aus der US-A-3 544 162 bekannt sind, weist das Rastorgan ein Blechteil mit einem zentralen Loch auf, das eine geradlinig verlaufende Rastkante besitzt. Mit dieser geradlinig verlaufenden Rastkante ist das Rastorgan entweder in eine entsprechende Aussparung federnd eingerastet, oder die besagte Rastkante schleift beim Verstellen der Kopfstütze in Bezug auf die Rückenlehne des Fahrzeugsitzes federnd an der Außenkontur des zugehörigen Verbindungselementes zwischen den benachbarten Aussparungen entlang, so daß sich eine entsprechende Schleifspur ergibt. Zur Vermeidung dieser Schleifspur wurde auch bereits vorgeschlagen, das Rastorgan mit einem Kunststoffteil zu kombinieren oder mit Kunststoff zu beschichten.

Kopfstützen-Arretiereinrichtungen der eingangs genannten Art sind beispielsweise auch aus der FR-A-2 671 587, aus der EP-A-0 165 593, aus der DE 296 05 983 U1 oder aus der DE 34 37 803 A1 bekannt.

Der Erfindung liegt die Aufgabe zugrunde, eine Kopfstützen-Arretiereinrichtung der eingangs genannten Art zu schaffen, bei welcher eine Schleifspur zwischen benachbarten Aussparungen des Verbindungselementes vermieden wird, wobei gleichzeitig eine zuverlässige Arretierung in der Arretierstellung der Arretiereinrichtung gewährleistet wird.

Diese Aufgabe wird bei einer Kopfstützen-Arretiereinrichtung der eingangs genannten Art erfindungsgemäß dadurch gelöst, daß das Rastorgan zwei miteinander einen spitzen Winkel einschließende Gleitkanten und eine die beiden Gleitkanten miteinander verbindende Rastkante aufweist, wobei die beiden sich von der Rastkante weg erweiternden Gleitkanten und die Rastkante derartig gestaltet sind, daß die Rastkante von der Außenkontur des entsprechenden Verbindungselementes beabstandet ist, wenn die beiden Gleitkanten in der Freigabestellung der Arretiereinrichtung federnd an der Außenkontur des Verbindungselementes anliegen und daß die Rastkante in der jeweiligen Aussparung des Verbindungselementes federnd anliegt, wenn sich das Rastorgan in der Arretierstellung befindet.

Die Aussparungen in dem mindestens einen die Kopfstütze mit der Rückenlehne eines Fahrzeugsitzes verbindenden Verbindungselement sind vorzugsweise als umlaufende Rillen ausgebildet. Nachdem die Rastkante aus Metall besteht, ergibt sich in der Arretierstellung also ein metallischer Kontakt zwischen dem Rastorgan und dem Verbindungselement. Dieser metallische Kontakt ist in der Freigabestellung dann aufgehoben.

Die erfindungsgemäße Arretiereinrichtung mit den beiden Gleitkanten weist den Vorteil auf, daß die Flächenpressung des Rastorganes gegen die Außenkontur des Verbindungselementes auf zwei Gleitkanten anstatt auf eine einzige Rastkante aufgeteilt wird, wobei außerdem die tatsächlich auf die Außenkontur des Verbindungselementes senkrecht zu dieser wirksam werdende Druckkraft um einen Faktor reduziert ist, der dem Sinus des halben Öffnungswinkels zwischen den beiden Gleitkanten des Arretierorganes entspricht und somit sehr klein ist. Unerwünschte Schleifspuren entlang der Außenkontur des Verbindungselementes zwischen den zweckmäßigerweise als umlaufende Rillen ausgebildeten Aussparungen werden demzufolge bei der erfindungsgemäßen Kopfstützen-Arretiereinrichtung auf einfache Weise vermieden. Andererseits ergibt sich jedoch eine sehr zuverlässige Arretierung des Verbindungselementes in der Arretierstellung des Rastorganes, die insbesondere durch die geradlinig verlaufende Rastkante aus Metall sowie zusätzlich durch die beiden miteinander einen spitzen Winkel einschließenden Gleitkanten bewirkt wird.

In der Arretierstellung ergibt sich also - wie bereits erwähnt worden ist - ein Metallkontakt der Rastkante mit der Metalloberfläche der entsprechenden Aussparung im Verbindungselement. In der Freigabestellung ergibt sich eine gleitbewegliche Anlage der beiden aus Kunststoff bestehenden Gleitkanten des Rastorganes an der Außenkontur des Verbindungselementes, so daß störende Schleifspuren vermieden werden. Das wird insbes. auch dadurch vermieden, daß in der Freigabestellung in vorteilhafter Weise die Rastkante gleichzeitig von der Außenkontur des Verbindungselementes beabstandet ist. Ein Metall zu Metall-Kontakt wird in der Freigabestellung in vorteilhafter Weise also vermieden.

Die beiden miteinander einen spitzen Winkel einschließenden Gleitkanten und die Rastkante können im Rastorgan derartig ausgebildet sein, daß in der Arretierstellung tatsächlich nur die Rastkante an der Innenkontur des Verbindungselementes bzw. an der entsprechenden Rastausnehmung eng anliegt. Zweckmäßig kann es jedoch sein, wenn die beiden Gleitkanten und die Rastkante derartig gestaltet sind, daß das Rastorgan in der Arretierstellung auch mit den beiden Gleitkanten an der Innenkontur der jeweiligen Rastausnehmung bzw. umlaufenden Rille des Verbindungselementes federnd anliegt. Auf diese Weise ergibt sich eine dreiseitige Anlage des Rastorganes an der Innenkontur der jeweiligen Rastausnehmung bzw. umlaufenden Rille im entsprechenden Verbindungselement und somit eine zuverlässige Arretierung des Verbindungselementes, d.h. der Kopfstütze in Bezug auf die Rückenlehne des entsprechenden Fahrzeugsitzes.

Bevorzugt ist es, wenn die beiden Gleitkanten in Bezug auf eine zur Rastkante senkrecht orientierte Mittelachse symmetrisch vorgesehen sind, weil sich dann entsprechende symmetrische Kräfteverhältnisse und somit eine zuverlässige Wirkungsweise der erfindungsgemäßen Kopfstützen-Arretiereinrichtung ergibt.

Eine ausgezeichnete Dauerstandfestigkeit mit optimierten Betriebseigenschaften ergibt sich, wenn bei der erfindungsgemäßen Kopfstützen-Arretiereinrichtung das Rastorgan aus einem Blechmaterial besteht und die beiden Gleitkanten durch eine Kunststoffbeschichtung der entsprechenden Abschnitte des Blechmaterials des Rastorganes gebildet sind. Für die Kunststoffbeschichtung wird ein Kunststoffmaterial gewählt, das eine gute Abriebfestigkeit aufweist und einen passenden Reibungskoeffizienten bezüglich des Materials für das Verbindungselement besitzt.

Weitere Einzelheiten, Merkmale und Vorteile ergeben sich aus der nachfolgenden Beschreibung eines in der Zeichnung stark vergrößert dargestellten Ausführungsbeispieles der erfindungsgemäßen Kopfstützen-Arretiereinrichtung. Es zeigen:
- Fig. 1: in einer schematischen Seitenansicht einen Fahrzeugsitz mit einer Rückenlehne und einer mit der Rückenlehne mittels zweier Verbindungselemente verbundenen, höhenverstellbaren Kopfstütze,
- Fig. 2: einen Schnitt entlang der Schnittlinie A-A in Figur 1 durch eines der Verbindungselemente und durch die zugehörige Kopfstützen-Arretiereinrichtung in einem stark vergrößerten Maßstab, wobei das Rastorgan in der Arretierstellung gezeichnet ist, und
- Fig. 3: eine der Figur 2 ähnliche Schnittdarstellung, in welcher das Rastorgan der Kopfstützen-Arretiereinrichtung in der Freigabestellung gezeichnet ist.

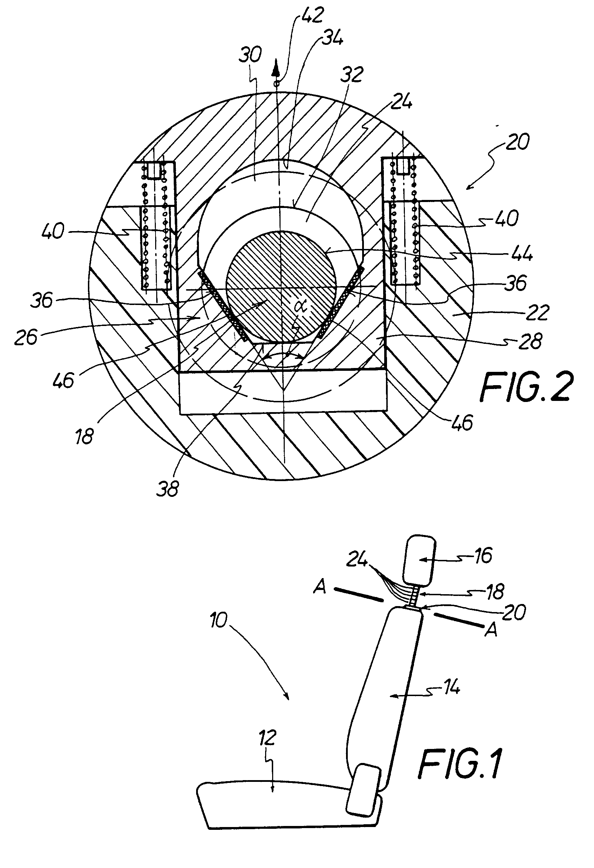

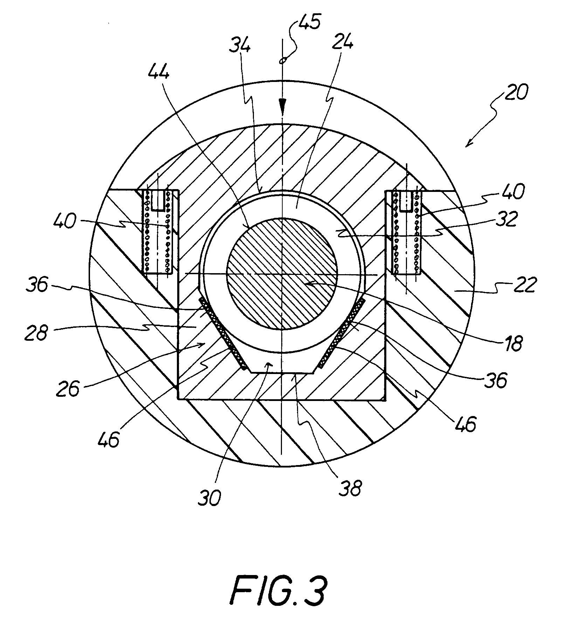

Figur 1 zeigt in einer Seitenansicht schematisch einen Fahrzeugsitz 10 mit einem Sitzteil 12 und einer Rückenlehne 14. An der Oberseite der Rückenlehne 14 ist eine Kopfstütze 16 vorgesehen, die mittels zweier voneinander beabstandeter Verbindungselemente 18 mit der Rückenlehne 14 höhenverstellbar verbunden ist. In Figur 1 ist nur eines dieser beiden Verbindungselement 18 sichtbar. An der Rückenlehne 14 sind den beiden Verbindungselementen 18 zugeordnet zwei Kopfstützen-Arretiereinrichtungen 20 vorgesehen. Die jeweilige Kopfstützen-Arretiereinrichtung 20 weist - wie aus den Figuren 2 und 3 ersichtlich ist - ein Gehäuse 22 auf, durch das sich das zugehörige Verbindungselement 18 zentral hindurcherstreckt. Das jeweilige Verbindungselement 18 ist mit umlaufenden Rillen 24 ausgebildet, die in Längsrichtung des jeweiligen Verbindungselementes 18 voneinander beabstandet vorgesehen sind, wie in Figur 1 angedeutet ist.

Im Gehäuse 22 der jeweiligen Kopfstützen-Arretiereinrichtung 20 ist ein Rastorgan 26 quer zur Längsrichtung des zugehörigen Verbindungselementes 18 linear beweglich vorgesehen. Das Rastorgan 26 ist in Figur 2 in der Arretierstellung und in Figur 3 in der Freigabestellung gezeichnet. Das Rastorgan 26 weist ein Blechteil 28 mit einem Loch 30 auf. Durch das Loch 30 erstreckt sich das Verbindungselement 18 hindurch. Das Loch 30 weist einen an die Außenkontur 32 des Verbindungselementes 18 angepaßten Lochrandabschnitt 34 sowie zwei daran anschließende Gleitkanten 36 auf, die miteinander einen spitzen Winkel α einschließen. Die beiden Gleitkanten 36 sind auf der vom Lochrandabschnitt 34 abgewandten Seite durch eine Rastkante 38 miteinander verbunden.

In der normalen Betriebsstellung der Kopfstützen-Arretiereinrichtung 20 wird das Rastorgan 26 durch Federelemente 40 in Richtung des Pfeiles 42 derartig gezwängt, daß das Rastorgan 26 seine Arretierstellung einnimmt, in welcher zumindest die Rastkante 38 an der durch eine entsprechende umlaufende Rille 24 bestimmten Innenkontur 44 des Verbindungselementes 18 anliegt. Zweckmäßigerweise sind die beiden miteinander einen spitzen Winkel α einschließenden Gleitkanten 36 und die Rastkante 38 des Loches 30 im Rastorgan 26 derartig gestaltet, daß in der Arretierstellung (sh. Figur 2) sowohl die Rastkante 38 als auch die beiden Gleitkanten 36 an der Innenkontur 44 der jeweiligen umlaufenden Rille 24 des Verbindungselementes 18 federnd anliegen.

Wird das Rastorgan 26 in Richtung des Pfeiles 45 (sh. Figur 3) gedrückt, so wird das Rastorgan 26 bei gleichzeitiger mechanischer Spannung der Federelemente 40 in seine Freigabestellung verstellt, wie sie in Figur 3 gezeichnet ist. In dieser Freigabestellung liegen dann nur die beiden miteinander einen spitzen Winkel α einschließenden Gleitkanten 36 an der Außenkontur 32 des Verbindungselementes 18 an. Die die beiden Gleitkanten 36 miteinander verbindende, metallische Rastkante 38 ist in dieser Freigabestellung in vorteilhafter Weise jedoch von der Außenkontur 32 des Verbindungselementes 18 beabstandet.

Gleiche Einzelheiten sind in den Figuren 1, 2 und 3 jeweils mit denselben Bezugsziffern bezeichnet, so daß es sich erübrigt, in Verbindung mit allen diesen Figuren sämtliche Einzelheiten jeweils detailliert zu beschreiben.

Die Gleitkanten 36 des Rastorganes 26 sind zweckmäßigerweise mit einer Kunststoffbeschichtung 46 versehen.

## Patentansprüche

1. Kopfstützen-Arretiereinrichtung, die mit einem Verbindungselement (18) zusammenwirkt, das eine höhenverstellbare Kopfstütze (16) mit einer Rückenlehne (14) eines Fahrzeugsitzes (10) verbindet, wobei das Verbindungselement (18) voneinander beabstandete Aussparungen aufweist und die Arretiereinrichtung (20) ein in einem Gehäuse (22) federnd vorgesehenes Rastorgan (26) aufweist, das zwischen einer in eine Aussparung (24) einrastenden Raststellung und einer Freigabestellung verstellbar ist, wobei das Rastorgan (26) eine Rastkante (38) und mindestens eine Gleitkante (36) aufweist, die in Bezug zueinander derartig vorgesehen sind, daß in der Arretierstellung die Rastkante (38) in die entsprechende Aussparung (24) eingerastet ist, und wobei die mindestens eine Gleitkante (36) in der Freigabestellung an der Außenkontur (32) des zugehörigen Verbindungselementes (18) gleitbeweglich anliegt und die Rastkante (38) vom Verbindungselement (18) beabstandet ist,
**dadurch gekennzeichnet,**
daß das Rastorgan (26) zwei miteinander einen spitzen Winkel (α) einschließende Gleitkanten (36) und eine die beiden Gleitkanten (36) miteinander verbindende Rastkante (38) aufweist, wobei die beiden sich von der Rastkante (38) weg erweiternden Gleitkanten (36) und die Rastkante (38) derartig gestaltet sind, daß die Rastkante (38) von der Außenkontur (32) des entsprechenden Verbindungselementes (18) beabstandet ist, wenn die beiden Gleitkanten (36) in der Freigabestellung der Arretiereinrichtung federnd an der Außenkontur (32) des Verbindungselementes (18) anliegen und daß die Rastkante (38) in der jeweiligen Aussparung (24) des Verbindungselementes (18) federnd anliegt, wenn sich das Rastorgan (26) in der Arretierstellung befindet.

2. Kopfstützen-Arretiereinrichtung nach Anspruch 1,
**dadurch gekennzeichnet,**
daß die Rastkante (38) aus Metall und daß die mindestens eine Gleitkante (36) aus Kunststoffmaterial besteht.

3. Kopfstützen-Arretiereinrichtung nach Anspruch 1 oder 2,
**dadurch gekennzeichnet,**
daß die Aussparungen (24) in dem mindestens einen Verbindungselement (18) als umlaufende Rillen ausgebildet sind.

4. Einrichtung nach Anspruch 1,
**dadurch gekennzeichnet,**
daß die beiden Gleitkanten (36) und die Rastkante (38) derartig gestaltet sind, daß das Rastorgan (26) in der Arretierstellung auch mit den beiden Gleitkanten (36) in der jeweiligen Aussparung (24) des Verbindungselementes (18) federnd anliegt.

5. Einrichtung nach Anspruch 1,
**dadurch gekennzeichnet,**
daß die beiden Gleitkanten (36) in Bezug auf eine zur Rastkante (38) senkrecht orientierte Mittelachse symmetrisch vorgesehen sind.

6. Einrichtung nach einem der Ansprüche 1 bis 3,
**dadurch gekennzeichnet,**
daß das Rastorgan (26) aus einem Blechmaterial besteht und die beiden Gleitkanten (36) durch eine Kunststoffbeschichtung (46) des Blechmaterials des Rastorgans (26) gebildet sind.

## Claims

1. Head-restraint locking device which interacts with a connecting element (18) which connects a height-adjustable head restraint (16) to a backrest (14) of the vehicle seat (10), where the connecting element (18) has spaced-apart recesses, and the locking device (20) has a latching member (26) which is provided resiliently in a housing (22) and can be adjusted between a latching position, in which it latches into a recess (24), and a release position, where the latching member (26) has a latching edge (38) and at least one sliding edge (36) which are provided with respect to one another in such a manner that in the locking position the latching edge (38) has latched into the corresponding recess (24), and where in the release position the at least one sliding edge (36) bears in a slidable manner against the outer contour (32) of the associated connecting element (18) and the latching edge (38) is spaced apart from the connecting element (18), characterized in that the latching member (26) has two sliding edges (36) which enclose an acute angle (α) with one another, and has a latching edge (38) which connects the two sliding edges (36) to one another, the two sliding edges (36), which spread further apart away from the latching edge (38), and the latching edge (38) are designed in such a manner that the latching edge (38) is spaced apart from the outer contour (32) of the corresponding connecting element (18) when, in the release position of the locking device, the two sliding edges (36) bear resiliently against the outer contour (32) of the connecting element (18), and in that the latching edge (38) bears resiliently in the corresponding recess (24) of the connecting element (18) when the latching member (26) is in the locking position.

2. Head-restraint locking device according to Claim 1, characterized in that the latching edge (38) consists of metal and in that the at least one sliding edge (36) consists of plastic material.

3. Head-restraint locking device according to Claim 1 or 2, characterized in that the recesses (24) in the at least one connecting element (18) are designed as encircling grooves.

4. Device according to Claim 1, characterized in that the sliding edges (36) and the latching edge (38) are designed in such a manner that in the locking position the latching member (26), together with the two sliding edges (36) as well, bears resiliently in the particular recess (24) of the connecting element (18).

5. Device according to Claim 1, characterized in that the two sliding edges (36) are provided symmetrically with respect to a central axis which is orientated perpendicularly with respect to the latching edge (38).

6. Device according to one of Claims 1 to 3, characterized in that the latching member (26) consists of a sheet-metal material, and the two sliding edges (36) are formed by a plastic coating (46) of the sheet-metal material of the latching member (26).

## Revendications

1. Dispositif de blocage pour appuie-tête, du type coopérant avec un élément de liaison (18) réunissant un appuie-tête réglable en hauteur (16) avec un dossier (14) d'un siège de véhicule (10), l'élément de liaison (18) présentant des évidements écartés l'un de l'autre, et le dispositif d'arrêt (20) présentant un organe d'arrêt (26) prévu élastique dans un boîtier (22), qui peut être réglé entre une position d'arrêt butant dans un évidement (24) et une position de libération, l'organe d'arrêt (26) présentant un biseau d'arrêt (38) et au moins un biseau lisse (36) qui peuvent être prévus l'un par rapport à l'autre de manière telle que, dans la position d'arrêt, le biseau d'arrêt (38) est en butée dans l'évidement correspondant (24), tandis que dans la position de libération, au moins un des biseaux lisses (36) repose de manière coulissante sur le contour exteme (32) de l'élément de liaison correspondant (18) et le biseau d'arrêt (38) est éloigné de l'élément de liaison (18), **caractérisé en ce que** l'organe d'arrêt (26) se compose de deux biseaux lisses (36) déterminant un angle aigu (α) et d'un biseau d'arrêt (38) réunissant ensemble les deux biseaux lisses (36), les deux biseaux lisses s'éloignant en s'ouvrant à partir du biseau d'arrêt (38) et le biseau d'arrêt (38) étant agencé de manière telle que le biseau d'arrêt (38) est éloigné du contour extérieur (32) de l'élément de liaison correspondant (32) quand les deux biseaux lisses (36) dans la position de libération du dispositif d'arrêt reposent élastiquement sur le contour extérieur (32) de l'élément de liaison (18) et en ce que le biseau d'arrêt (38) repose élastiquement dans l'évidement correspondant (24) de l'élément de liaison (18) quand l'organe d'arrêt (26) se trouve dans la position d'arrêt.

2. Dispositif de blocage pour appuie-tête selon la revendication 1, caractérisé en ce que le biseau d'arrêt (38) est réalisé en métal et qu'au moins l'un des biseaux lisses (36) est réalisé en matière synthétique.

3. Dispositif de blocage pour appuie-tête selon la revendication 1 ou la revendication 2, caractérisé en ce que les évidements (24) sont constitués par des rainures pratiquées dans au moins un élément de liaison (18).

4. Dispositif de blocage pour appuie-tête selon la revendication 1, caractérisé en ce que les deux biseaux lisses (36) et le biseau d'arrêt (38) sont agencés de telle manière que l'organe d'arrêt (26), dans la position d'arrêt, repose à la fois sur les deux biseaux lisses (36) dans l'évidement correspondant (24) de l'élément de liaison (18).

5. Dispositif de blocage pour appuie-tête selon la revendication 1, caractérisé en ce que les deux biseaux lisses (36) sont prévus verticaux et symétriques par rapport à un axe médian par rapport au biseau d'arrêt (38).

6. Dispositif de blocage pour appuie-tête selon l'une des revendications 1 à 3, caractérisé en ce que l'organe d'arrêt (26) est réalisé en tôle et les deux biseaux lisses (36) sont constitués par une couche de matériau synthétique (46) sur la tôle de l'organe d'arrêt (26).
